# EUROPÄISCHE PATENTSCHRIFT

(11) **EP 3 784 016 B1**
(45) Veröffentlichungstag und Bekanntmachung des Hinweises auf die Patenterteilung: **12.06.2024**
(21) Anmeldenummer: 19720099.1
(22) Anmeldetag: 23.04.2019
(51) Int. Cl.: A01D 34/416

(54) **SCHNEIDKOPF FÜR EINEN RASENTRIMMER**
CUTTING HEAD FOR A STRING TRIMMER
TÊTE DE COUPE POUR UNE TONDEUSE À GAZON

(30) Priorität: 22.04.2018 DE 102018206174
(43) Veröffentlichungstag der Anmeldung: 03.03.2021
(73) Patentinhaber: Robert Bosch GmbH, 70442 Stuttgart (DE)
(72) Erfinder: SZANTAI, Istvan Gabor, 2254 Szentmartonkata (HU)
(86) Internationale Anmeldenummer: PCT/EP2019/060322
(87) Internationale Veröffentlichungsnummer: WO 2019/206877

(56) Entgegenhaltungen:
- EP-A1- 0 417 967
- EP-A1- 1 393 611
- WO-A1-2017/059917
- US-A- 4 244 103

## Beschreibung

### Stand der Technik

Es sind bereits Schneidköpfe für Rasentrimmer nach dem Oberbegriff des Anspruchs 1 bekannt. Ferner sei auf die Druckschriften EP 1 393 611 A1, EP 0 417 967 A1, US 4 244 103 A und WO 2017/059917 A1 verwiesen.

### Offenbarung der Erfindung

Die Erfindung geht aus von einem Schneidkopf für einen Rasentrimmer mit den Merkmalen des Anspruchs 1.

Es wird vorgeschlagen, dass ein Schwerpunkt des Schwenkhebels, in einer Arretierstellung des Schwenkhebels (so dass kein Schneidfaden nachgelängt bzw. nachgeführt wird), zur Rotationsachse des Schneidkopfs einen radial in etwa gleich großen oder größeren Abstand aufweist, als der Abstand der Schwenkhebelrotationsachse zur Rotationsachse. Der Schneidkopf weist ferner ein Gehäuse auf. An dem Gehäuse ist Koaxial zur Rotationsachse eine Spule anortenbar. Der Schwenkhebel interagiert mit einem Nachführkontur der Spule. Dadurch wird eine Arretier- und Nachstelleinrichtung für einen Schneidfaden bereitgestellt. Der Schwenkhebel ist exzentrisch zur Rotationsachse am Gehäuse gelagert. Der Schwenkhebel ist verlagerbar aus einer Arretierstellung in eine Nachführ- oder Nachlängstellung bei der die freie Fadenlänge, welche von dem Schneidkopf radial abstehen kann, verlängert wird. Fliehkraftabhängig und/oder Beschleunigungsabhängig (insbesondere beim Abbremsen) wird eine Ralativdrehung zwischen Spule und Gehäuse zum Zwecke der Fadennachstellung bzw. -nachlängung ermöglicht.

Vorteilhafterweise kann dadurch beim Abschalten des Rasentrimmers und/oder Stoppen des Schneidkopfs eine Nachlängung des Fadens erfolgen. Bei längerem Schneidfadengebrauch ohne viel Fadenverschleiß an dessen Spitze kommt es dadurch seltener zu einem Verschleiß des Fadens an einer Öse bzw. einem Austrittspunkt des Schneidfadens aus der Spule. Mitunter kann es nämlich zum Bruch des Schneidfades nicht an dessen Spitze, sondern am Übergang von innerhalb nach Außerhalb des Schneidkopfs kommen. Dadurch Rutscht der Schneidfaden nach innerhalb des Schneidkopfs bzw. der Öse und der Nutzer muss aufwendig den Schneidkopf öffnen, den Schneidfaden manuell längen und dann wieder durch die Öse nach außerhalb des Schneidkopfs führen. Ein Überlängen wird indes vermieden, da an der Schutzhaube des Rasentrimmer typischerweise eine Abschlagkante vorgesehen ist, wodurch der Schneidfaden auf eine definierte Maximallänge begrenzt wird. Erfindungsgemäß wird also beim Abschalten des Geräts zumindest der Schneidfaden um ein Inkrement, was durch die Nachführkontur vorgegeben wird gelängt. Ferner wird der Schneidfaden aber auch gelängt, wenn es während des rotierenden Betriebs zum Verschleiß und einer Ablängung des Schneidfadens kommt (beispielsweise, weil der Nutzer einen harten Gegenstand trifft oder bearbeitet z.B. einen Stein, ein Metallteil oder gar etwas Klingenähnliches. Hier erfolgt die Nachlängung dann aufgrund der Verschiebung des Fliehkraftgleichgewichts von Schneidfaden, Schwenkhebelschwerpunkt und/oder Zentrifugalmasse und der Mitnehmer bzw. Nachführkontur in bekannter weise. Kurzum wird erfindungsgemäß der Betrieb eines Rasentrimmers komfortabler und sicherer.

Des Weiteren wird ein Rasentrimmer aufweisend einen Schneidkopf zum automatischen Nachlängen eines Schneidfadens, insbesondere aufweisend einen vorgenannten Schneidkopf beansprucht. Es wird vorgeschlagen, dass beim Stoppen bzw. Abbremsen des Schneidkopfs und/oder Abschalten des Antriebs des Schneidkopfs oder Rasentrimmer der Schneidfaden automatisch nachlängt. Dadurch werden die vorgenannten Vorteile erzielt.

Ferner wird ein Verfahren zum Betrieb eines Rasentrimmers, aufweisend einen um eine Rotationsachse rotierbaren Schneidkopf mit einem (Mechanismus zum) automatisch nachlängen eines Schneidfaden vorgeschlagen, insbesondere einem wie vorgenannt beschriebenem Mechanismus, wobei beim Stoppen bzw.

Abbremsen des Schneidkopfs und/oder Abschalten des Antriebs des Rasenmähers, der Schneidfaden automatisch nachgelängt wird, insbesondere um eine Länge analog zu einem Nachführglied nachgelängt wird. Ausgehend von den bisherigen automatischen Nachführmechanismen, welche lediglich bei Verschleiß des Schneidfadens bzw. Kürzung den Faden nachlängen, wird erfindungsgemäß ausschließlich oder zusätzlich zum Verschleißnachlängen der Schneidfaden bei insbesondere jedem Motorstopp bzw. Anhalten des Rasentrimmers nachgelängt und dadurch auf Ideallänge gebracht. Dadurch können auch Vibrationen bzw. unerwünschte Schwingungen zumindest auf einen kleineren Bereich eingeschränkt werden. Der Komfort wird gesteigert. Eine kontinuierliche Nachführung wird sichergestellt. Somit werden bisherig bekannte rein verschleißbasierte Nachführmechanismen verbessert bzw. erweitert.

Es wird vorgeschlagen, dass durch Anordnung des Schwerpunkts eines Schwenkhebels, derart, dass beim Abbremsen bzw. Stoppen des Schneidkopfs der Schwenkhebel durch ein auf ihn wirkendes Abbremsmoment, den Schwenkhebel in die Nachführstellung überführt, eine Nachlängung erfolgt. Dadurch, dass der Schwerpunkt des Schwenkhebels zwar insbesondere im Umfangsrichtung Achsversetzt zur Schwenkhebelrotationsachse und/oder aber im Bereich des gleichen oder größeren radialen Abstands zur Rotationsachse wie die Schwenkhebelrotationsachse angeordnet ist kommt es beim Abstoppen bzw. Abbremsen zu einem Verschwenken und nachlängen. Dies erfolgt überdies bei Rotation des Schneidkopfs in die eine oder andere Rotationsrichtung, also gleichwohl ob im oder gegen den Uhrzeigersinn, erfolgt beim Abbremsen die Längung. Der Schwerpunkt ist idealerweise in einer Sperrstellung des Nachlängmechanismuses im gleichen radialen Abstand zur Rotationsachse wie die Schwenkhebelrotationsachse zur Rotationsachse angeordnet. Der Schwerpunkt ist im Bereich einer Zentrifugalmasse des Schwenkhebels angeordnet. Er befindet sich gegenüber einem Arm bzw. einem Konturgleitbolzen bezogen auf die Schwenkhebelrotationsachse.

Darüber hinaus wird ein Schneidkopf für einen Rasentrimmer vorgeschlagen, wobei das Gehäuse des Schneidkopfs eine Öse zum herausführen eines Schneidfadens aufweist, dadurch gekennzeichnet, dass die Öse U-förmig ausgebildet ist und einseitig offen ist. Dadurch kann ein leichtes Einlegen oder Ersetzten des Schneidfadens erfolgen. Dieser ist nicht aufwendig durch ein Loch oder eine geschlossene Öse im Gehäuse oder Deckel zu führen. Ein Positionierfortsatz am Deckel übernimmt indes die Niederhalte- und/oder Positionierfunktion. Damit wird der Komfort für den Anwender gesteigert. Ein Verscheiß am Gehäuse wird durch die Ausbildung der Öse als Metallbauteil erhöht. Die Ecken sind abgerundet. Die Öse übergrakt das umliegende Kunststoffgehäuse und verteilt dadurch die Kräfte. Dem Verschleiß des Schneidkopfs wird dadurch Abhilfe geleistet.

Ferner wird eine Spule für einen Schneidkopf eines Rasentrimmers, insbesondere für einen vorgenannten Schneidkopf oder Rasentrimmer beansprucht, wobei die Spule eine parallel zu Rotationsachse der Spule verlaufende Fadenendfixiervertiefung aufweist, die an, in oder radial innerhalb der Spulenwickelfläche angeordnet ist und einen Spulenfadenniederhalter aufweist der radial innerhalb der Spulenwickelfläche angeordnet ist. Dadurch lässt sich ein neuer oder Austauschfaden auf sehr einfache und sichere Weise an der Spule anbringen. Ein unerwünschter gänzlicher Abwurf des Schneidfadens sofern sich dieser dem Ende neigt wird vermieden. Eine sichere Fixierung des Schneidfadens an der Spule gewährleistet.

Zudem wird vorgeschlagen, dass der Spulenfadenniederhalter axial unterhalb (insbesondere beabstandet zur Stirnfläche einer Austrittsöffnung der Fadenfixiervertiefung) einer Fadeneintrittsöffnung zur Spulenwickelfläche angeordnet ist, insbesondere Fadeneintrittsöffnung von radial innerhalb nach radial außerhalb der Spulenwickelfläche. Dadurch wird eine Doppelumlenkung und folglich eine sichere Fixierung des Schneidfadens ermöglicht.

Außerdem wird vorgeschlagen, dass der Spulenfadenniederhalter zumindest zur Zweifachumlenkung eines an der Spule anortenbaren Schneidfadens vorgesehen ist, bevorzugt eine erste Umlenkung um >90° in eine erste Richtung und >0° Umlenkung in eine zweite Umlenkrichtung; Insbesondere wird vorgeschlagen, dass die Umlenkung um >135° in eine erste und um >30° in eine zweite Umlenkrichtung, eines an der Spule anortenbaren Schneidfadens vorgesehen ist. Dadurch wird auf einfache und gut erreichbare bzw. Bedienbare Weise eine sichere Fixierung des Schneidfadenendes z.B. beim Austausch oder der Neubestückung der Spule sichergestellt.

Ferner wird vorgeschlagen, dass eine Austrittsöffnung der Fadenfixiervertiefung mit einer Stirnfläche der Spule planparallel angeordnet ist.

Zudem wird vorgeschlagen, dass an der Innenseite der Fadeneintrittsöffnung zur Spulenwickelfläche eine Phase vorgesehen ist, insbesondere wobei eine Phasenflächeneben in Flucht mit dem Spulenfadenniederhalter ist. Dadurch wird ein Knicken des Fadens vermieden, die Kräfte verteilt und ein sehr flaches Anwickeln des Schneidfadens (ohne einen Überstand auf Seiten der Spulenwickelfläche) ermöglicht.

Außerdem wird ein Verfahren zum aufwickeln eines Schneidfadens eines Rasentrimmers auf eine Spule beansprucht, aufweisend die folgenden Schritte: Einstecken des Schneidens in eine Fadenendfixiervertiefung, Umlenkung des Schneidfadens den Spulenfadenniederhalter, erneutes Umlenken des Schneidfadens durch die Fadeneintrittsöffnung zu Spulenwickelfläche, aufwickeln des Schneidfadens auf die Spulenwickelfläche.

Ferner wird vorgeschlagen, dass der Raentrimmer oder Freischneider eine v-förmige Griffeinheit aufweist; und/oder ein Schwerpunkt der Handwerkzeugmaschine entlang der Längsachse einer Distanzeinheit und/oder eines Hauptrohres angeordnet ist; und/oder der Schwerpunkt im Bereich einer Schwenkeinheit der Griffeinheit zum Liegen kommt; und/oder eine Bearbeitungseinheit auf der einen Seite der Längsachse einer Distanzeinheit und/oder eines Hauptrohres und die Griffeinheit oder zumindest ein Handgriff auf der anderen Seite angeordnet ist; und/oder dass ein Momentengleichgewicht zwischen der Bearbeitungseinheit und der Griffeinheit um eine Längsachse der Distanzeinheit und/oder des Hauptrohres vorliegt.

Weitere Vorteile ergeben sich aus der folgenden Zeichnungsbeschreibung. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Der Schutzumfang wird ausschließlich von den beiliegenden Ansprüchen definiert.

Es zeigen:
- Fig. 1: Einen erfindungsgemäßen Rasentrimmer in einer Frontansicht,
- Fig. 2: Einen erfindungsgemäßen Schneidkopf in einer perspektivischen Ansicht,
- Fig. 3: Den erfindungsgemäßen Schneidkopf in einer Explosionsdarstellung,
- Fig. 4: Schnitt- und Detailansichten des erfindungsgemäßen Schneidkopfs,
- Fig. 5: Eine Unteransicht des Schneidkopfs mit abgenommenem Deckel, eine Schnittdarstellung D-D (mit Deckel) und eine Draufsicht in den Schneidkopf mit freigeschnittenem Gehäuse
- Fig. 6: Eine perspektivische Ansicht des Gehäuses ohne und mit Spule, sowie daneben die Spule in einer Drauf-, Seiten und Unteransicht
- Fig. 7: Eine Unteransicht in das Gehäuse mit daran angeordnetem Schwenkhebel (oben) und darunter den Schwenkhebel in einer arretierten Position mit der Nachführkontur zur Verdeutlichung deren Interaktion,
- Fig. 8: Drei Stadien des Schwenkhebels und der Nachführkontur in einer Freigabe-bzw. Nachlängstellung zum Nachlängen des Schneidfadens bzw. zur Relativverdrehung der Spule zum Gehäuse.

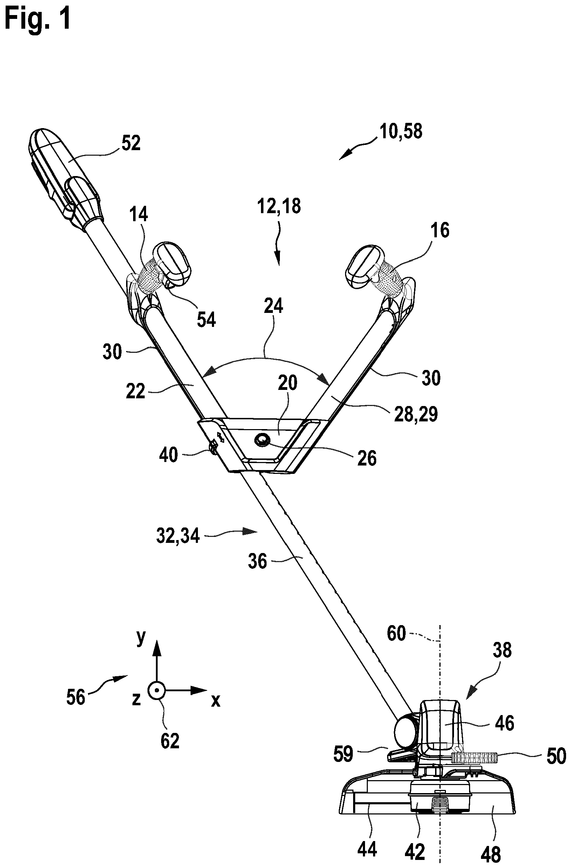

Figur 1 zeigt eine Rasentrimmer 10. Der Rasentrimmer 10 weist eine Griffeinheit 12 auf. Die Griffeinheit 12 umfasst zumindest einen ersten Handgriff 14. Ferner umfasst die Griffeinheit 12 einen zweiten Handgriff 16. Der erste Handgriff 14 ist mit dem zweiten Handgriff 16 über eine Verbindungseinheit 18 verbunden. Der zweite Handgriff 16 ist verlagerbar bzw. ausklappbar zum ersten Handgriff 14 ausgebildet. Insbesondere kann der zweite Handgriff 16 über eine Schwenkeinheit 20 relativ zum ersten Handgriff 14 bzw. relativ zu einem Hauptrohr 22 verschwenkt werden. Der Schwenkwinkel ist ein spitzer Winkel 24. Dadurch nimmt die Griffeinheit 12 in einer Arbeitsposition eine V-förmige Stellung ein. Die Schwenkeinheit 20 stellt einen Teil der Verbindungseinheit 18 bzw. der Griffeinheit 12 dar. Die Schwenkeinheit 20 ist über das Auslöseelement 26 lösbar. Dadurch kann durch einen Nutzer das Aus- und/oder Einklappen initiiert werden. Die Griffeinheit 12 ist an dem Hauptrohr 22 bzw. einem Gestänge des Rasentrimmers 10 befestigt. Die Griffeinheit 12 kann auch ein Teil dieses Hauptrohrs 22 oder Gestänges bilden. Der zweite Handgriff 16 ist ebenfalls über ein Rohr 28 mit der Schwenkeinheit 20 verbunden. Das Rohr 28 stellt gewissermaßen ein Teil der Griffeinheit 12 bzw. der Verbindungseinheit 18 dar. Das Hauptrohr 22 bzw. das Rohr 28 sind jeweils zumindest teilweise von Verbindungs- oder Versteifungselementen 30 umgeben. Diese können Einstückig oder mehrteilig mit den jeweiligen Handgriffen 14, 16 ausgebildet sein. Sie versteifen die Position der Handgriffe 14, 16. Sie umgeben zumindest teilweise das Hauptrohr 22 und Rohr 28. Es sind aber auch beliebige andere Handgriffkonfigurationen denkbar - z.B. eine Konfiguration mit einem Handgriff am Hauptrohr 22 und einem weiteren Handgriff am oberen Ende des Hauptrohrs oder dergleichen mehr.

Über eine Distanzeinheit 32 oder Teleskopeinheit 34, hier ein weiteres Rohr 36, insbesondere ein teleskopierbares Rohr, ist die Griffeinheit 12 mit einer Bearbeitungseinheit 38 verbunden. Die Distanzeinheit 32 verbindet die Griffeinheit 12 und die Bearbeitungseinheit 38 miteinander und beabstandet sie zueinander. Die Distanzeinheit 32 ist verschiebbar zur Griffeinheit 12 bzw. dem Hauptrohr 22 ausgebildet. Durch betätigen einer Verstellvorrichtung 40 ist die Distanzeinheit 32 teleskopierbar. Damit lässt sich der Rasentrimmer 10 an unterschiedliche Bedienhöhen und/oder -positionen anpassen oder kompakt verstauen bzw. transportieren (diese Position hier nicht dargestellt). Die Bearbeitungseinheit 38 umfasst einen Schneidkopf 42. Der Schneidkopf 42 weist einen Schneidfaden 44 auf. Aufgrund der hohen Rotationsgeschwindigkeit des Schneidfadens 44 wird dieser durch Zentrifugalkräfte gestrafft und kann dadurch ein Schnittgut, insbesondere Gras oder Sträucher, schneiden oder abschlagen. Der Schneidkopf 42 umfasst im vorliegenden Beispiel eine Antriebseinheit 46. Die Antriebseinheit 46 wird hier durch einen Motor gebildet, insbesondere einen Elektromotor, und mitunter ein nachgeschaltetes Unter- oder Übersetzungsgetriebe. Sofern die Antriebseinheit 46 den Schneidkopf 42 bzw. den aus dem Schneidkopf 42 herausragenden Schneidfaden 44 rotatorisch antreibt, kann mit dem Schneidfaden 44 in bekannter Weise Gras bzw. Rasen oder auch Buschwerk geschnitten bzw. getrimmt werden. Die Antriebseinheit 46 wird beispielhaft durch einen Akku (hier nicht dargestellt) mit Energie versorgt. Der Akku kann beispielsweise wie hier am von der Bearbeitungseinheit 38 beabstandeten Ende des Hauptrohrs 22 an einer Akkuaufnahme 52 angeordnet werden. Dies kann wie hier der verbesserten Verteilung des Gleichgewichts bzw. der Verbesserung der Ergonomie des Rasentrimmers 10 dienen. Der Akku stellt sozusagen ein Gegengewicht zum Motor bzw. dem Schneidkopf 42 dar. Zur Aktivierung des Motors kann ein Schalter 54, insbesondere ein Gasgebeschalter von einem Anwender betätigt werden. Schalt- und/oder Steuersignale und/oder der Energietransport zwischen Griffeinheit 12 und Schneidkopf 42 erfolgen hier beispielhaft über nicht dargestellte Kabel, die innerhalb des Hauptrohrs 22 und der Distanzeinheit 32 verlegt sein können. Selbstverständlich kann der Rasentrimmer 10 eine Steuer- oder Regelung aufweisen, welche die Steuer- oder Regelung des Motors ausgehend zumindest von Signalen des Schalters 54 übernimmt und/oder die den Akku- oder Motorzustand und/oder dergleichen überwacht, steuert oder regelt. Ebenso kann bei derartigen Gartengeräten der Motor auch an einer anderen Stelle, beispielsweise am vom Schneidkopf 42 beabstandeten Ende des Hauptrohrs 22 angeordnet sein (also im Bereich der hier dargestellten Akkuschnittstelle 52). Dieser kann den Schneidkopf 42, beispielsweise über eine im Hauptrohr 22 und der Distanzeinheit 32 bzw. dem weiteren Rohr 36 verlaufende Kraftübertragungswelle, mit Antriebsenergie versorgen. Auch alternative Antriebe wie Verbrennungsmotor, Pneumatik, Hydraulik oder dergleichen sind vorstellbar. Ferner weist die Bearbeitungseinheit eine Schutzhaube 48, einen Distanzhalter 50 z.B. zur Durchführung von Kantenschnitten mit verschwenkter Bearbeitungseinheit 38 und ein Fußpedal 59, hier zur Verstellung einer Ausrichtung des Schneidkopfs 42 (Horizontal- oder Vertikalschnitt) und einem Winkel des Hauptrohrs 22, bzw. der Distanzeinheit 32 gegenüber der Bearbeitungsebene, auf.

Zur besseren Übersichtlichkeit und zur Orientierung ist ein Koordinatensystem 56 abgebildet. Bezogen auf den hier dargestellten Schneidkopf 42 bzw. Rasentrimmer 10 in seiner Horizontalschnittkonfiguration 58, rotiert der Schneidkopf bzw. der Schneidfaden 44 um die Rotationsachse 60 bzw. die Y-Achse. Eine Horizontalschnittebene wird durch die X- und Z-Achse aufgespannt. Das ist hier auch die Ebene in der der Schneidfaden 44 rotiert. Die Z-Achse welche aus der Betrachtungsebene der Zeichnung hinaus verläuft definiert zur besseren Erläuterung auch eine Hauptschnittrichtung 62. Diese Hauptschnittrichtung 62 definiert beispielhaft den Gerade-Aus-Gang eines Benutzers des Rasentrimmers 10 bei der Ausführung von Horizontalschnitten.

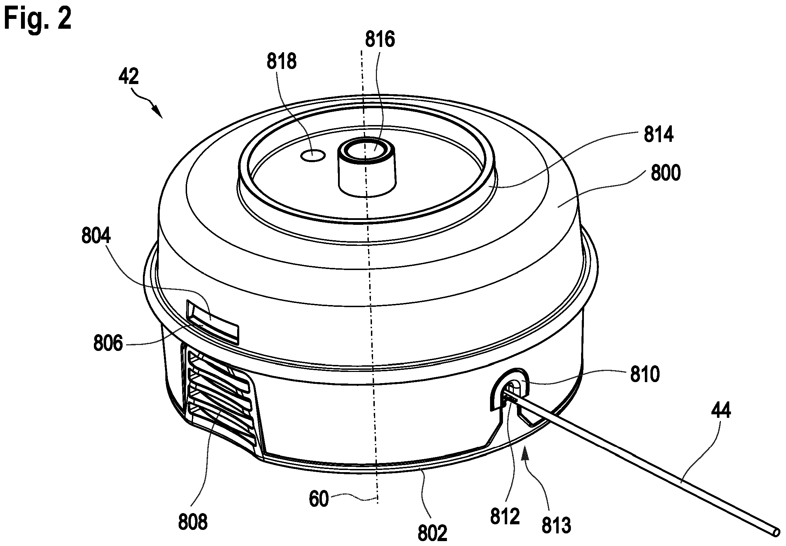

Figur 2 zeigt den Schneidkopf 42 in einer perspektivischen Ansicht. Er weist ein Gehäuse 800 und einen Deckel 802 auf. Diese sind miteinander über Rastnasen 804 am Deckel 802 die in Rastnuten 806 am Gehäuse 800 einrasten verbunden. Bei Betätigung bzw. eindrücken der Grifflaschen 808 (auf der gegenüberliegenden Seite ist eine identische Grifflasche, Rastnase und Rastnut angeordnet) können die Rastnasen 804 außer Eingriff mit den Rastnuten 806 gebracht werden. Dann lässt sich der Deckel 802 abheben beispielsweise zum Spulen- oder Fadentausch oder zur Inspektion. Ferner sind der aus einer U-förmigen Öse 810 herausragende Schneidfaden 44 dargestellt. Ein Positionierfortsatz 812 am Deckel 802 begrenzt die axiale Beweglichkeit parallel zu Rotationsachse 60 des Schneidfadens 44 im Bereich der Öse 810. Die Öse 810 weist abgerundete Kanten auf, damit der Schneidfaden 44 belastungsarm gelagert werden kann. Bei Wiederständen durch zu schneidendes Schnittgut wird der Schneidfaden 44 gegen die Öse 810 gedrückt. Durch die Abrundungen kann ein rascher Verschleiß vermieden werden. An der Stelle des Austritts bzw. der Fadenaustrittsöffnung 813 des Schneidfadens 44 aus dem Schneidkopf 42, ist der Schneidfaden 44 gemeinhin stark belastet. Sofern es zu keiner kontinuierlich bzw. periodischen Längung des Schneidfadens 44 kommt, ist dies eine mögliche unerwünschte Bruchstelle. Ferne ist ein Führungssteg 814 dargestellt, ein Lager 816 in dessen Mitte die Rotationsachse 60 des Schneidkopfs 42 verläuft und ein Bolzenlager 818 für einen hier nicht dargestellten Schwenkhebel.

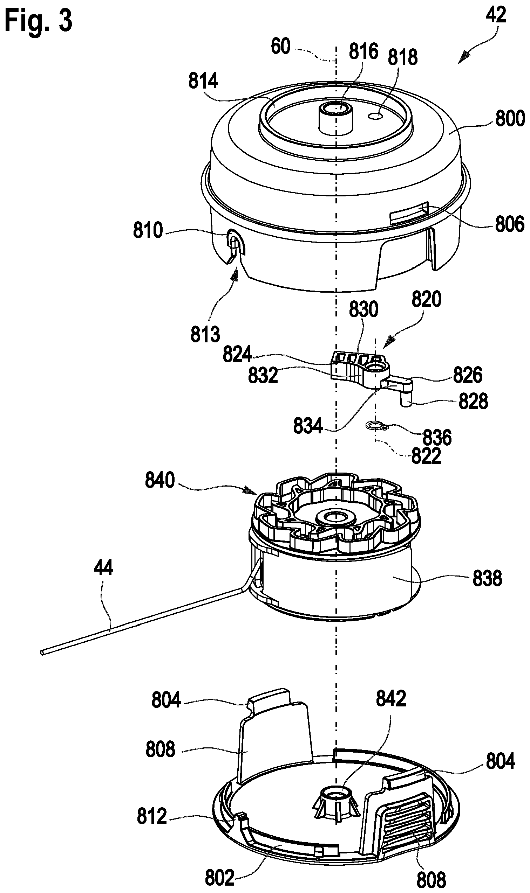

Figur 3 zeigt den Schneidkopf 42 in einer Explosionsdarstellung. Gleichteile aus Figur 2 sind identisch nummeriert und werden im Regelfall nicht nochmals erläutert. Aufgrund der Explosionszeichnung wird auch das Innenleben des Schneidkopfs 42 sichtbar. Ein Schwenkhebel 820 der um eine Schwenkhebelrotationsachse 822 schwenkbar gelagert ist wird sichtbar. Dieser Schwenkhebel 820 weist eine verdickten Arm mit einer Zentrifugalmasse 824 auf. Ihm gegenüber ist ein Arm 826 dargestellt, der an einem freien Ende einen Konturgleitbolzen 828 aufweist. Der Konturgleitbolzen 828 ist parallel zur Schwenkhebelrotationsachse 822 sowie zur Rotationsachse 60 ausgerichtet. Der Schwenkhebel 820 weist ferner zumindest eine axiale Anschlagfläche 830 auf. Diese können die die beiden Arme gegenüber dem Gehäuse 800 abstützen. Ferner weist Schwenkhebel 820 eine erste radiale Anschlagfläche 832 auf der Seite der Zentrifugalmasse 824 und eine zweite radiale Anschlagfläche 834 am Arm 826 auf. Der Schwenkhebel 820 ist über einen nicht dargestellten Bolzen, der im Bolzenlager 818 des Gehäuses 800 eingepresst ist, mit einem Seegerring 836 axial am Gehäuse fixiert und schwenkbar gelagert.

Ferner ist eine Spule 838 dargestellt. Auf deren Oberseite ist eine Nachführkontur 840 angeordnet und vorteilhaft einstückig mit der Spule 838 ausgebildet. Aus der Spule 838 ragt der Schneidfaden 44 hervor. Unten im Bild ist der Deckel 802 mit seinen Grifflaschen 808 den Rastnasen 804 und dem Positionierfortsatz 812 dargestellt. Er weist ferner eine Stiftaufnahme 842 auf.

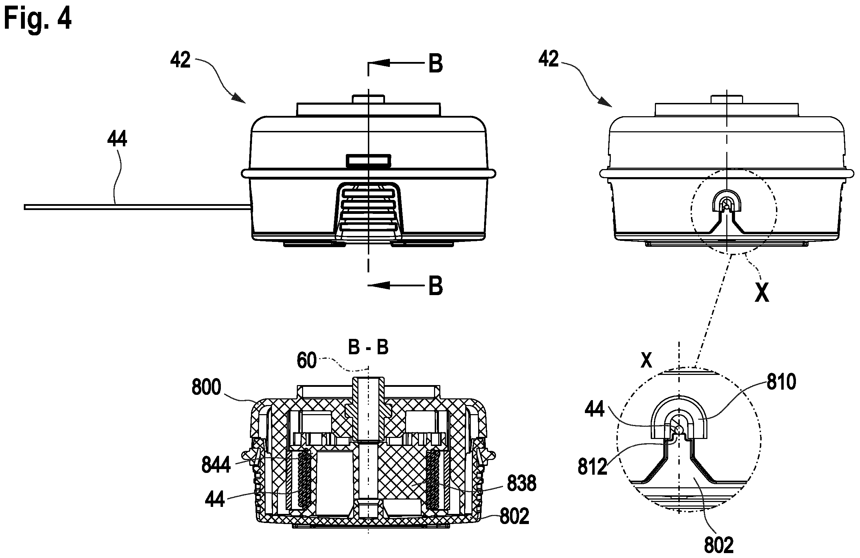

Figur 4 stellt im Wesentlichen selbsterklärende Schnitt- und Detailansichten des erfindungsgemäßen Schneidkopfs 42 dar. Wie im Folgenden generell sind sich aus den vorhergehenden Figuren wiederholde Bezugszeichen eingezeichnet, aber nicht zwingend erneut beschrieben. Ergänzend ist hier der auf der Spule 838 bzw. der Spulenwickelfläche 844 aufgewickelte Schneidfaden 44 sichtbar.

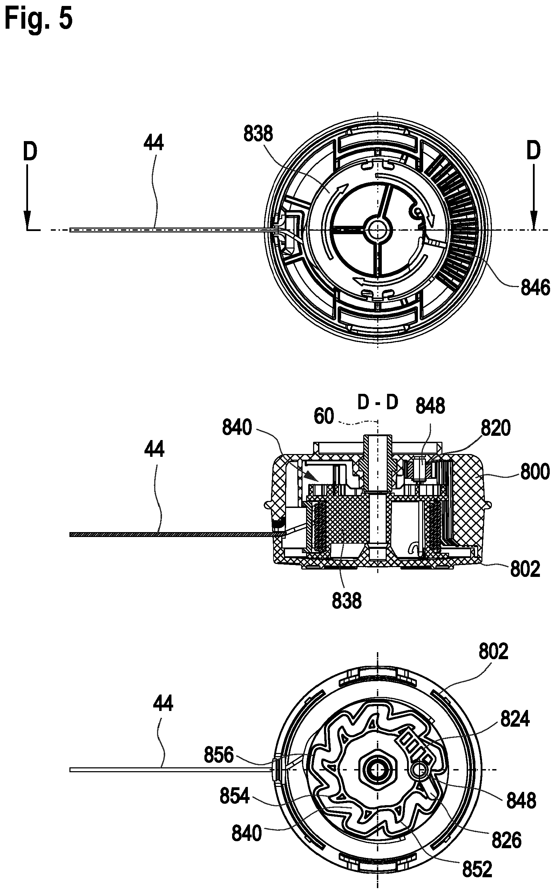

Figur 5 zeit oben eine Unteransicht des Schneidkopfs 42 mit abgenommenem Deckel 802; mittig eine Schnittdarstellung des Schneidkopfs 42 (mit Deckel 802) und unten eine Draufsicht in den Schneidkopf 42 mit freigeschnittener Gehäuseoberseite. Das Gehäuse 800 weist gegenüberliegend zum Schneidfaden 44 ein Gegengewicht bzw. eine Ausgleichsmasse 846 auf, was die vom herausragenden Schneidfaden 44 ausgehende Zentrifugalkraft bei Rotation kompensiert. Ferner ist in der mittleren Darstellung der den Schwenkhebel 820 lagernde Bolzen 848 sichtbar. In der unteren Ansicht sind eine Außenkontur 850 und Innenkontur 852 der Nachführkontur 840 sichtbar. Die Innenkontur 852 bildet an der Stelle des Bezugszeichens Nocken 854 bzw. Fortsätze, die Außenkontur 850 radial zu den Nocken beabstandete Ausbuchtungen 856. In Umfangsrichtung versetzt dazu ist es umgekehrt. Insgesamt weist die Spule neun Nocken 854 auf. Somit beträgt ein Schneidfaden-Inkrement 1/9*2*pi*r wobei r der Abstand des aufgewickelten Schneidfadens 44 von der Rotationsachse 60 ist. Ein automatisches nachlängen des Schneidfadens 44 entspricht einem solchen Schneidfaden-Inkrement.

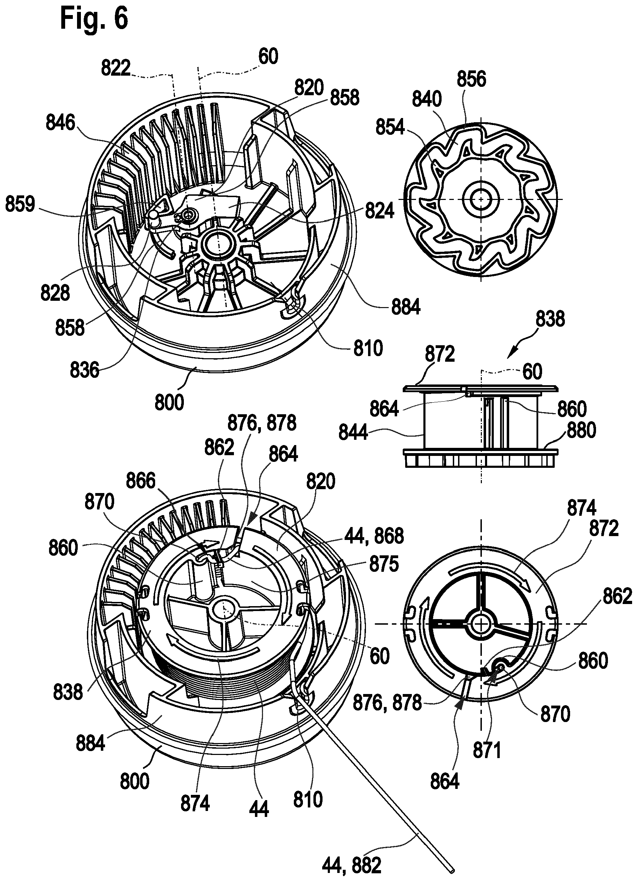

Figur 6 zeigt links oben eine perspektivische Ansicht des Gehäuses 800 ohne Spule 838 und darunter mit Spule 838. Rechts daneben ist untereinander die Spule 838 in einer Drauf-, einer Seiten- und einer Unteransicht gezeigt. Im Gehäuse 800 sind axiale Anschlagflächen 858 für den Schwenkhebel 820 bzw. deren Arme dargestellt. Das Gehäuse 800 weist einen radialen Anschlag 859 für den Schwenkhebel 820 auf. Die aufgefächerte Ausgleichsmasse 846 ist sichtbar.

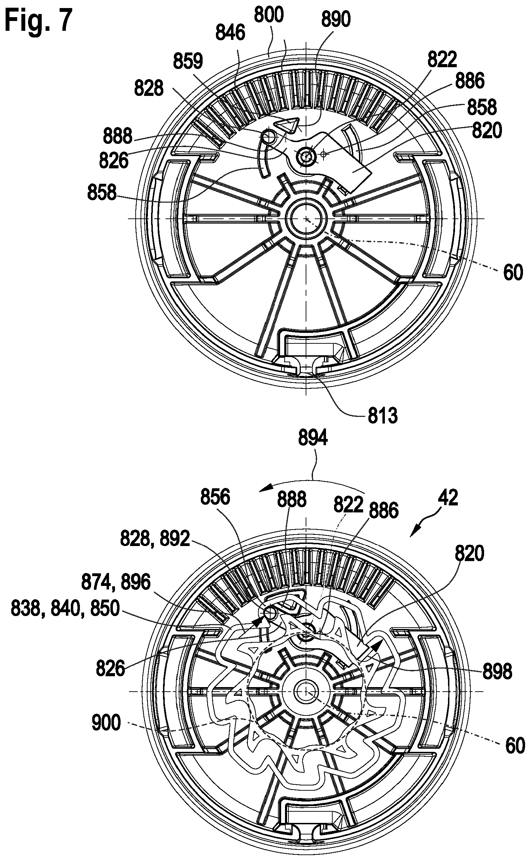

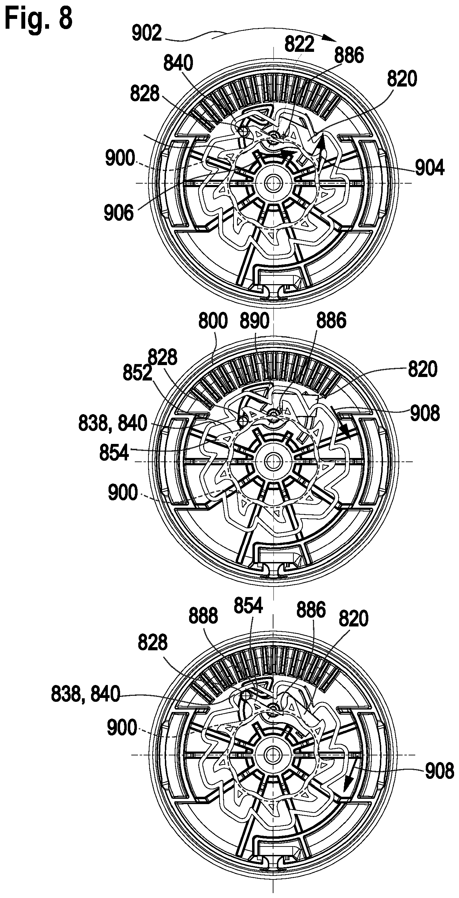

Im Folgenden soll anhand der Ansichten der Spule 838 die erfindungsgemäße Fixierung des Schneidfadens 44 an der Spule 838 erläutert werden, sowie auf die erfindungsgemäße Öse 810 eingegangen werden. Die Spule 838 weist eine parallel zu Rotationsachse 60 der Spule 838 verlaufende Fadenendfixiervertiefung 860 auf. Diese ist in der, und/oder radial innerhalb der, Spulenwickelfläche 844 angeordnet. Ferner ist ein Spulenfadenniederhalter 862 zu sehen. Dieser ist radial innerhalb der Spulenwickelfläche 844 bezogen auf die Rotationsachse 60 angeordnet. Ferner ist der Spulenfadenniederhalter 862 axial auf gleicher Höhe oder unterhalb einer Fadeneintrittsöffnung 864 zur Spulenwickelfläche 844 angeordnet. Die Fadeneintrittsöffnung 864 verläuft von radial innerhalb nach radial außerhalb der Spulenwickelfläche 844. Der Spulenfadenniederhalter 862 ist vorteilhaft zur Zweifachumlenkung (in entgegengesetzte Richtungen) eines an der Spule 838 anortenbaren Schneidfadens 44 vorgesehen. Bevorzugt erfolgt die Umlenkung 866 um >90° in eine erste und um >0° in eine entgegengesetzte zweite Umlenkrichtung 868. Insbesondere kann die Umlenkung 866 >135° in eine erste Richtung betragen und >30° in eine zweite Umlenkrichtung 868. Damit wird der an der Spule 838 anortenbare Schneidfaden 44 an einer Austrittsöffnung 870 der Fadenendfixiervertiefung 860 und dem Spulenfadenniederhalter 862 durch seine innere Steifigkeit, die der Umlenkung bzw. Zweifachumlenkung entgegenwirkt, verzwängt und es entsteht eine Haftreibung, die ausreicht um den Schneidfaden 44 sicher an der Spule 838 zu fixieren bzw. festzulegen. Die Fadenendfixiervertiefung 860 ist im Bereich der Austrittsöffnung 870 leicht eingeschnitten 871, so dass der Schneidfaden 44 planparallel zur Stirnfläche 872 der Spule 838 aus der Fadenendfixiervertiefung 860 geführt werden kann. Auf der Stirnfläche 872 ist auch ein Pfeil 874 dargestellt, der die Aufwickelrichtung des Schneidfadens 44 definiert und für einen Nutzer kenntlich macht. Die richtige Wickelrichtung kann notwendig sein, damit ein in den Figuren 7 und 8 näher erläuterter automatischer Nachlängmechanismus ordnungsgemäß funktioniert. Zudem ist an der Innenseite 875 der Fadeneintrittsöffnung 864 zur Spulenwickelfläche 844 eine Phase 876 vorgesehen. Eine durch die Phasenfläche aufgespannte Phasenflächeneben 878 ist im Wesentlichen in Flucht mit dem Spulenfadenniederhalter 862 ausgerichtet. Im Folgenden wird beschrieben wie ein Schneidfaden 44 an der Spule 838 angebracht wird. Als erstes wird der Schneidfaden 44 in die Fadenendfixiervertiefung 860 eingesteckt bis dieser an der gegenüberliegenden Wandung 880 axial anschlägt. Dann wird der Schneidfaden 44 unter den Spulenfadenniederhalter 862 gedrückt bzw. umgelenkt. Durch erneutes zumindest leichtes Umlenken des Schneidfadens 44 wird dieser durch die Fadeneintrittsöffnung 864 zur Spulenwickelfläche 844 geführt. Ein Schneidfadenende (hier nicht dargestellt - steckt in der Fadenendfixiervertiefung 860) ist damit sicher an der Spule 838 fixiert. So kann der restliche Schneidfaden 44 auf der 844 Spulenwickelfläche, insbesondre in parallelen Bahnen, aufgewickelt werden. Schließlich wird das freie Ende des Schneidfadens 44 in die U-förmige Öse 810 gelegt, so dass ein ausreichend langes Schneidfadenstück 882 die radial Wandung 884 des Gehäuses 800 bzw. des Schneidkopfs 42 überragt. Durch die halboffene U-förmige Öse 810 kann der Schneidfaden 44 einfach axial eingelegt werden und muss nicht radial von innerhalb des Gehäuses 800 nach außerhalb durchgesteckt werden.

Figur 7 oben stellt eine Unteransicht in/auf das Gehäuse 800 mit daran angeordnetem Schwenkhebel 820 dar. Am Schwenkhebel 820 ist zusätzlich die Position eines Schwerpunkts 886 dargestellt. Ferner ist der radiale Anschlag 859 für den Schwenkhebel 820 dargestellt. Dieser Begrenzt eine Schwenkbewegung sowohl im Uhrzeiger-, als auch im Gegenuhrzeigersinn. Einmal kann der Arm 826 an der radialen Anschlagfläche 888 anschlagen; bei Drehung im Gegenuhrzeigersinn schlägt die Zentrifugalmasse 824 an der radialen Anschlagfläche 890 an. Der Schwenkhebel 820 ist somit nur begrenzt radial drehbar. Der Schwenkhebel 820 ist als Ausgleichsmasse für den Schneidfaden 44 wie auch die Ausgleichsmasse 846 gegenüber der Fadenaustrittsöffnung 813 angeordnet.

In der Figur 7 unten ist der Schwenkhebel 820 in einer die Spule 838 arretierten Stellung dargestellt - zur Verdeutlichung der Interaktion zusammen mit der Nachführkontur 840. Der Schwenkhebel 820 liegt mit dem Arm 826 an der radialen Anschlagfläche 888 an. Ferner liegt der Konturgleitbolzen 828 in einem Endbereich 892 der Ausbuchtung 856 an der Außenkontur 850 der Nachführkontur 840 an. Die Wandung der Außenkontur 850 ist in diesem Endbereich um ca. 90° gekrümmt und weist einen ähnlichen, leicht größeren Radius wie der des Konturgleitbolzen 828 auf. Die Wandungsschenkel der Nachführkontur sind in etwa radial und tangential zur Rotationsachse 60 angeordnet und verbunden mit einem gleich- oder etwas größeren Radius als der des Konturgleitbolzens 828. Der Pfeil 894 verdeutlicht eine Drehrichtung des Schneidkopfs 42. Mit ihm dreht sowohl das Gehäuses 800 als auch die Spule 838. Prinzipiell funktioniert der Nachlängmechanismus aber auch bei umgekehrter Drehrichtung des Schneidkopfs 42.

Aufgrund der Umdrehungszahl bzw. Rotationsgeschwindigkeit des Schneidkopfs 42 im Betrieb, wirkt an dem Schneidfaden 44 (vgl. Figur 7 unten links) eine verhältnismäßig hohe Flieh- bzw. Zentrifugalkraft. Aufgrund der außermittigen Anordnung des Schneidfadens 44 an der Spule 838 (bzw. an deren Spulenwickelfläche 844), bezogen auf die Rotationsachse 60, wird ein auf die Spule 838 wirkendes Moment erzeugt, das die Spule in Richtung des Pfeils 874 relativ zum Gehäuse 800 ziehen bzw. drehen will. Es wirkt also eine Kraft in Richtung des Pfeils 896, ausgeübt von der Spule 838 gegen den Konturgleitbolzen 828. Dies führt zu einer Haftreibung zwischen Konturgleitbolzen 828 und Nachführkontur 840. Zugleich wirkt auf den Schwenkhebel 820 an der Zentrifugalmasse 824 eine Fliehkraft in radialer Richtung nach außen (also in Richtung des Pfeils 898). Schwenkhebel, Spule und Schneidfaden inkl. deren Geometrien und Massen, sind so aufeinander abgestimmt, dass bei optimaler Schneidlänge des Schneidfadens 44 die Fliehkraft die Haftreibung nicht überschreitet. Sprich es kommt im regulären Rotationsbetrieb zu keinem Verschwenken des Schwenkhebels 820. Sobald aber der Schneidfaden 44 kürzer wird, z.B. durch Verschleiß, nimmt dessen Zentrifugalkraft ab, die Spule 838 wird nur noch schwächer gegen den Konturgleitbolzen 828 gedrückt und die verhältnismäßig dazu konstant bleibende Fliehkraft der Zentrifugalmasse 824 überwiegt nun. Folglich kommt es zu einem Verschwenken des Schwenkbolzens, wie auch aus den Figuren 8 hervorgeht.

Dieser Mechanismus ist gemeinhin bekannt. Dadurch kann eine automatische Nachlängung des Schneidfadens 44 bei dessen Verschleiß erfolgen. Die erfindungsgemäße Besonderheit hier, ist aber die Anordnung des Schwerpunkts 886 des Schwenkhebels 820 relativ zur Schwenkhebelrotationsachse 822 und Relativ zur Rotationsachse 60. Der Schwerpunkt 886 des Schwenkhebels 820, ist nämlich in dessen Arretierstellung (wie in Figur 7 unten dargestellt, so dass kein Schneidfaden 44 nachgelängt bzw. nachgeführt), relativ zur Rotationsachse 60 des Schneidkopfs 42 radial in etwa gleich weit von der Rotationsachse 60 beabstandet, wie die Schwenkhebelrotationsachse 822. Dies wird verdeutlicht durch den Kreis 900 um die Rotationsachse 60, dessen Radius genau dem radialen Abstand der Schwenkhebelrotationsachse 822 zur Rotationsachse 60 entspricht. Auf diesem Kreis 900, also in gleichem Abstand wie die Schwenkhebelrotationsachse 822, ist in etwa auch der Schwerpunkt 886 des Schwenkhebels 820 in dieser Konfiguration bzw. Position des Schwenkhebels angeordnet.

Sobald der Schneidkopf 42 nun wie in Figur 8 dargestellt abgebremst wird, bzw. der Motor stoppt oder der Rasentrimmer 10 abgeschaltet wird, kommt es zu einer Abbremsung des Schneidkopfs 42 und folglich einer auf den Schneidkopf 42 wirkenden Beschleunigung in Richtung des Pfeils 902 (siehe Fig. 8 oben). Dies führt zu einer Reaktionskraft auf den Schwenkhebel 820, die diesen aufgrund der vorgenannten Anordnung des Schwerpunkts 886 in Richtung des Pfeils 904 verschwenkt. Beim Abbremsen des Schneidkopfs 42 wird also die Haftreibungskraft zwischen Konturgleitbolzen 828 und Nachführkontur 840 überwunden. Durch die Drehung des Schwenkhebels 820 um die Schwenkbolzenrotationsachse 822 verlagert sich auch Schwerpunkts 886 nach Außerhalb des Kreises 900 was das Moment bzw. die Drehung in Richtung des Pfeils 904 oder 906 noch verstärkt und Folglich den Schwenkhebel 820 sicher in die Nachführposition überführt. Somit kommt es beim Abbremsen unabhängig von der Schneidfadenlänge zu einem Verschwenken des Schwenkhebels 820. Folglich kommt es zu einer Nachlängung des Schneidfadens 44 unabhängig davon, ob dieser bereits seine ideale Schneidlänge aufweist, oder nicht. Wie in Figur 8 (mittig und unten) gezeigt kommt es nun zu einer Relativbewegung der Spule 838 bzw. der Nachführkontur 840 in Richtung des Pfeils 908 relativ zum Gehäuse 800. Durch die Nachführkontur 840 (hier entlang der Innenkontur 852 und dem Nocken 854) wird die Spule 838 bzw. deren Nachführkontur 840 relativ zum Konturgleitbolzen 828 zumindest ein Inkrement weiter rotiert, bis der Konturgleitbolzen 828 wieder in der in Figur 7 unten gezeigten Ausgangslage zum Liegen kommt. Dieser Vorgang wiederholt sich beim Stopp bzw. Abschaltvorgang des Rasentrimmers 10.

Somit ist der Rasentrimmer 10 zum automatischen Nachlängen eines Schneidfadens 44 vorgesehen und längt zudem beim Stoppen bzw. Abbremsen des Schneidkopfs 42 und/oder Abschalten der Antriebseinheit 46 des Schneidkopfs 42 oder des Rasentrimmers 10 den Schneidfaden 44 automatisch nach. Somit wird auch ein Verfahren zum Betrieb eines Rasentrimmers 10 offenbart, aufweisend einen um eine Rotationsachse 60 rotierbaren Schneidkopf 42, mit einem Mechanismus zum automatischen nachlängen des Schneidfadens 44, was beim Stoppen bzw. Abbremsen des Schneidkopfs 42 und/oder Abschalten der Antriebseinheit 46 des Rasentrimmers 10 erfolgt, insbesondere um eine Inkrement bzw. eine Länge analog zu einem Nachführglied. Es wird also auch eine Anordnung des Schwerpunkts 886 des Schwenkhebels 820 offenbart, derart, dass beim Abbremsen bzw. Stoppen des Schneidkopfs 42 der Schwenkhebel 820 durch ein auf ihn wirkendes Abbremsmoment (hier in Richtung des Pfeils 904 - also radial weg von der Rotationsachse 60), der Schwenkhebel 820 in die Nachführstellung überführt wird. Folglich kommt es dadurch zu einer Nachlängung des Schneidfadens 44. Der Schwerpunkts 886 des Schwenkhebels 820 ist dazu auf oder außerhalb eines durch die Schwenkhebelrotationsachse 822 des Schwenkhebels 820 verlaufenden Kreises 900 um die Rotationsachse 60 des Schneidkopfs 42 angeordnet. Somit verdeutlicht Figur 8 die drei Stadien des Schwenkhebels 820 und der Nachführkontur 840 in einer Freigabe- bzw. Nachläng-Stellung zum Nachlängen des Schneidfadens 44. Es wird also (in den Ansichten von oben nach unten) ein Ablauf zur Relativverdrehung von Spule 838 und Gehäuse 800 zur Nachlängung des Schneidfadens 44 gezeigt.

## Patentansprüche

1. Schneidkopf (42) für einen Rasentrimmer (10), wobei der Schneidkopf (42) dazu vorgesehen ist einen Schneidfaden (44) automatisch nachzulängen, aufweisend einen Schwenkhebel (820), der um eine Schwenkhebelrotationsachse (822) schwenkbar gelagert ist, wobei in einer Arretierstellung des Schwenkhebels (820), insbesondere wobei kein Schneidfaden (44) nachgelängt wird, ein Schwerpunkt (886) des Schwenkhebels (820) relativ zur Rotationsachse (60) des Schneidkopfs (42) einen radial in etwa gleich großen oder größeren Abstand aufweist, wie die Schwenkhebelrotationsachse (822) zur Rotationsachse (60) des Schneidkopfs (42), **dadurch gekennzeichnet, dass** ein Abbremsen bzw. Stoppen des Schneidkopfs (42) den Schwenkhebel (820), durch ein auf ihn wirkendes Abbremsmoment, in die Nachführ- bzw. Nachlängstellung überführt.

2. Schneidkopf (42), nach Anspruch 1, **dadurch gekennzeichnet, dass** eine Nachlängfunktion beim Abbremsen oder Abstoppen, unabhängig von einer Drehrichtung des Schneidkopfs (42) bereitgestellt ist.

3. Schneidkopf (42) nach einem der vorhergehenden Ansprüche, wobei ein Gehäuse (800) des Schneidkopfs (42) eine Öse (810) zum herausführen eines Schneidfadens (44) aus dem Schneidkopf (42) aufweist, wobei die Öse (810) U-förmig ausgebildet und einseitig offen ist.

4. Schneidkopf (42) nach Anspruch 3, der dazu vorgesehen ist, dass ein Schneidfaden (44) axial parallel zu einer Rotationsachse (60) des Schneidkopfs (42), in die U-förmige Öse (810) einlegbar ist, insbesondere wobei eine Fadenaustrittsöffnung (813) durch einen Deckel (802), bevorzugt einen Deckel (802) mit einem Positionierfortsatz (812) zum Verschließen der U-förmig geöffneten Öse (810), verschließbar ist.

5. Schneidkopf (42) nach einem der vorhergehenden Ansprüche, **dadurch gekennzeichnet, dass** eine Spule (838) des Schneidkopfs (42) eine parallel zu einer Rotationsachse (60) der Spule (838) verlaufende Fadenendfixiervertiefung (860) aufweist, die an, in oder innerhalb einer Spulenwickelfläche (844) angeordnet ist, ferner aufweisend einen Spulenfadenniederhalter (862), der radial innerhalb der Spulenwickelfläche (844) angeordnet ist.

6. Schneidkopfs (42) nach Anspruch 5, **dadurch gekennzeichnet, dass** der Spulenfadenniederhalter (862) axial auf gleicher Höhe oder unterhalb einer Fadeneintrittsöffnung (864) zur Spulenwickelfläche (844) angeordnet ist, insbesondere einer Fadeneintrittsöffnung (864) von radial innerhalb nach radial außerhalb der Spulenwickelfläche (844).

7. Schneidkopfs (42) nach Anspruch 5 oder 6, **dadurch gekennzeichnet, dass** der Spulenfadenniederhalter (862) zumindest zur Zweifachumlenkung eines an der Spule (838) anortenbaren Schneidfadens (44) vorgesehen ist, bevorzugt um >90° in eine erste und >0° in eine zweite Umlenkrichtung (866, 868), insbesondere um >135° in eine erste und >30° in eine zweite Umlenkrichtung (866, 868), eines an der Spule (838) anortenbaren Schneidfadens (44) vorgesehen ist.

8. Schneidkopfs (42) nach einem der Ansprüche 5 bis 7, **dadurch gekennzeichnet, dass** an der Innenseite (875) der Fadeneintrittsöffnung (864) zur Spulenwickelfläche (844) eine Fase (876) vorgesehen ist, insbesondere wobei eine Fasenflächeneben (878) in Flucht mit dem Spulenfadenniederhalter (862) angeordnet ist.

9. Schneidkopf (42) nach einem der vorhergehenden Ansprüche, **dadurch gekennzeichnet, dass** der Schneidkopf (42) derart eingerichtet ist, dass fliehkraftabhängig und beschleunigungsabhängig eine Relativdrehung zwischen einer Spule (838) und einem Gehäuse (800) des Schneidkopfs (42) zum Zwecke der Fadennachstellung bzw. Fadennachlängung ermöglicht ist.

10. Rasentrimmer (10) aufweisend einen Schneidkopf (42) nach einem der vorhergehenden Ansprüche.

11. Verfahren, zum Betrieb eines Schneidkopfs (42) nach Anspruch 1 bis 9 oder zum Betrieb eines Rasentrimmers (10) nach Anspruch 10, **dadurch gekennzeichnet, dass** ein Abbremsen bzw. Stoppen des Schneidkopfs (42) den Schwenkhebel (820), durch ein auf ihn wirkendes Abbremsmoment, in die Nachführ- bzw. Nachlängstellung überführt.

## Claims

1. Cutting head (42) for a string trimmer (10), wherein the cutting head (42) is provided so as to lengthen a cutting line (44) automatically, having a pivot lever (820), which is mounted for pivoting about a pivot-lever axis of rotation (822), wherein, in an arresting position of the pivot lever (820), in particular with no cutting line (44) being lengthened, the distance of a centre of gravity (886) of the pivot lever (820) relative to the axis of rotation (60) of the cutting head (42) is radially approximately equal to, or greater than, the distance of the pivot-lever axis of rotation (822) in relation to the axis of rotation (60) of the cutting head (42), **characterized in that** a braking or stopping operation of the cutting head (42) transfers the pivot lever (820), as a result of a braking torque acting thereon, into the feeding or lengthening position.

2. Cutting head (42) according to Claim 1, **characterized in that** a lengthening function during the braking or stopping operation is provided irrespective of a direction of rotation of the cutting head (42).

3. Cutting head (42) according to either of the preceding claims, wherein a housing (800) of the cutting head (42) has an eyelet (810), through which a cutting line (44) can be guided out of the cutting head (42), wherein the eyelet (810) is of U-shaped design and is open on one side.

4. Cutting head (42) according to Claim 3, which is provided so that a cutting line (44) can be inserted into the U-shaped eyelet (810) in a manner axially parallel to an axis of rotation (60) of the cutting head (42), in particular wherein a line-exit opening (813) can be closed by a cover (802), preferably a cover (802) with a positioning extension (812) for closing the open-U eyelet (810) .

5. Cutting head (42) according to one of the preceding claims, **characterized in that** a spool (838) of the cutting head (42) has a line-end-fixing depression (860), which runs parallel to an axis of rotation (60) of the spool (838) and is arranged on, in or within a spool-winding surface (844), and also having a spool-line holding-down means (862), which is arranged radially within the spool-winding surface (844).

6. Cutting head (42) according to Claim 5, **characterized in that** the spool-line holding-down means (862) is arranged axially level with, or beneath, a line-entry opening (864) to the spool-winding surface (844), in particular a line-entry opening (864) running from radially within the spool-winding surface (844) to radially outside the same.

7. Cutting head (42) according to Claim 5 or 6, **characterized in that** the spool-line holding-down means (862) is provided so that a cutting line (44) which can be arranged on the spool (838) is deflected at least twice, and is preferably provided so that a cutting line (44) which can be arranged on the spool (838) is deflected through >90° in a first deflecting direction and >0° in a second deflecting direction (866, 868), in particular through >135° in a first deflecting direction and >30° in a second deflecting direction (866, 868).

8. Cutting head (42) according to one of Claims 5 to 7, **characterized in that** a chamfer (876) is provided on the inner side (875) of the line-entry opening (864) to the spool-winding surface (844), in particular wherein a chamfer-surface plane (878) is arranged in alignment with the spool-line holding-down means (862).

9. Cutting head (42) according to one of the preceding claims, **characterized in that** the cutting head (42) is designed such that, in dependence on centrifugal force and acceleration, relative rotation between a spool (838) and a housing (800) of the cutting head (42) is possible for line-adjusting or line-lengthening purposes.

10. String trimmer (10) having a cutting head (42) according to one of the preceding claims.

11. Method for operating a cutting head (42) according to Claims 1 to 9 or for operating a string trimmer (10) according to Claim 10, **characterized in that** a braking or stopping operation of the cutting head (42) transfers the pivot lever (820), as a result of a braking torque acting thereon, into the feeding or lengthening position.

## Revendications

1. Tête de coupe (42) pour un coupe-bordures (10), la tête de coupe (42) étant prévue pour rallonger automatiquement un fil de coupe (44), présentant un levier pivotant (820) qui est monté pivotant autour d'un axe de pivotement (822) de levier pivotant ; dans une position d'arrêt du levier pivotant (820), en particulier lorsqu'aucun fil de coupe (44) n'est rallongé, un centre de gravité (886) du levier pivotant (820) présente, par rapport à l'axe de rotation (60) de la tête de coupe (42), une distance radiale à peu près égale ou supérieure à celle de l'axe de pivotement (822) du levier pivotant par rapport à l'axe de rotation (60) de la tête de coupe (42), **caractérisée en ce qu'**un freinage ou un arrêt de la tête de coupe (42) fait passer le levier pivotant (820), par un couple de freinage agissant sur celui-ci, dans la position de continuation ou de ralentissement.

2. Tête de coupe (42) selon la revendication 1, **caractérisée en ce qu'**une fonction de continuation est prévue lors du freinage ou de l'arrêt, indépendamment d'un sens de rotation de la tête de coupe (42).

3. Tête de coupe (42) selon l'une des revendications précédentes, dans laquelle un boîtier (800) de la tête de coupe (42) comporte un œillet (810) pour faire sortir un fil de coupe (44) hors de la tête de coupe (42), l'œillet (810) ayant une forme en U et étant ouvert d'un côté.

4. Tête de coupe (42) selon la revendication 3, qui est prévue pour qu'un fil de coupe (44) puisse être inséré axialement parallèlement à un axe de rotation (60) de la tête de coupe (42), dans l'œillet (810) en forme de U, en particulier dans laquelle une ouverture (813) de sortie de fil est apte à être fermée par un couvercle (802), de préférence un couvercle (802) ayant un prolongement de positionnement (812) pour fermer l'œillet (810) ouvert en forme de U.

5. Tête de coupe (42) selon l'une des revendications précédentes, **caractérisée en ce qu'**une bobine (838) de la tête de coupe (42) présente une cavité (860) de fixation d'extrémité de fil s'étendant parallèlement à un axe de rotation (60) de la bobine (838), qui est agencée sur, dans ou à l'intérieur d'une surface d'enroulement (844) de bobine, présentant en outre un dispositif (862) de maintien de fil de bobine qui est agencé radialement à l'intérieur de la surface d'enroulement (844) de bobine.

6. Tête de coupe (42) selon la revendication 5, **caractérisée en ce que** le dispositif (862) de maintien de fil de bobine est agencé axialement au même niveau ou en dessous d'une ouverture (864) d'entrée de fil par rapport à la surface d'enroulement (844) de bobine, en particulier d'une ouverture (864) d'entrée de fil allant de radialement à l'intérieur vers radialement à l'extérieur de la surface d'enroulement (844) de bobine.

7. Tête de coupe (42) selon la revendication 5 ou la revendication 6, **caractérisée en ce que** le dispositif (862) de maintien de fil de bobine est prévu au moins pour une double déviation d'un fil de coupe (44) apte à être positionné sur la bobine (838), de préférence de >90° dans une première direction de déviation et de >0° dans une deuxième direction de déviation (866, 868), en particulier de >135° dans une première direction de déviation et de >30° dans une deuxième direction de déviation (866, 868), d'un fil de coupe (44) apte à être positionné sur la bobine (838).

8. Tête de coupe (42) selon l'une des revendications 5 à 7, **caractérisée en ce qu'**un chanfrein (876) est prévu sur le côté intérieur (875) de l'ouverture (864) d'entrée de fil par rapport à la surface d'enroulement (844) de bobine, un plan de surface de chanfrein (878) étant en particulier agencé en alignement avec le dispositif (862) de maintien de bobine.

9. Tête de coupe (42) selon l'une des revendications précédentes, **caractérisée en ce que** la tête de coupe (42) est agencée de telle sorte qu'une rotation relative entre une bobine (838) et un boîtier (800) de la tête de coupe (42) soit possible en fonction de la force centrifuge et de l'accélération dans le but d'ajuster ou de rallonger le fil.

10. Coupe-bordure (10) comprenant une tête de coupe (42) selon l'une des revendications précédentes.

11. Procédé d'utilisation d'une tête de coupe (42) selon les revendications 1 à 9 ou d'utilisation d'un coupe-bordures (10) selon la revendication 10, **caractérisé en ce qu'**un freinage ou un arrêt de la tête de coupe (42) amène le levier pivotant (820), par un couple de freinage agissant sur lui, de continuation ou de ralentissement.
